# EUROPEAN PATENT APPLICATION

(11) **EP 1 317 910 A1**
(43) Date of publication of application: **11.06.2003**
(21) Application number: 02406036.0
(22) Date of filing: 28.11.2002
(51) Int. Cl.: A61C 19/06, A61M 35/00, A46B 9/04

(54) **Medical instrument for use with liquids**

(30) Priority: 06.12.2001 CH 22272001
(71) Applicant: KerrHawe SA, 6934 Bioggio (CH)
(72) Inventor: Besek, Mario, 8800 Thalwil (CH)
(74) Representative: Seehof, Michel

(57) **Abstract**

The medical instrument for the application of liquids to teeth includes a handle portion (1) and a treating portion (2), the treating portion comprising a highly elastic sponge (6). In a preferred embodiment, the treating portion (2) is connected to the handle portion (1) by a ball joint (3). The use of a sponge allows an optimum application of the liquid on and in cavities without leaving residual material. The presence of a ball joint allows a safe treatment also in locations that are difficult to access otherwise.

## Description

The present invention refers to a medical instrument for use with liquids according to the introduction of claim 1.

A number of dental instruments are known which are used for the application of synthetic materials for dental fillings, the materials generally being liquids such as a primer or bonding agent. Such materials are used in the elaboration of composite fillings, and the instruments of the prior art for this purpose comprise a treating portion provided with a brush. The use of brushes in clinical applications is neither simple, nor does it satisfy the demands. They carry either too much or not enough liquid, and it is difficult to reach undercut areas as well as the important approximolateral dentine portion on the cervical shoulder. The use of fleecy, hirsute applicators is not satisfactory either.

Mainly in the case of liquids requiring a high wetting degree, wetting faults due to the formation of air bubbles or an oxygen inhibition of the polymerization can be avoided if thinning is counteracted by means of the air blower.

U.S.Patent No. 5 119 803 discloses a disposable medicinal applicator and gum massage tip for massaging the gum area. The conical end portion of the tip is formed of an absorbent sponge material. However, the tip member is resilient enough for the massaging action. Therefore, it is not useable for applying a fluid on teeth and removing the excess fluid therefrom.

The tip of the massaging instrument of U.S. Patent No. 4 653 480 is made of a rubber-like material and has no sponge-like function.

On the background of this prior art, it is an object of the present invention to provide a medical instrument, more particularly a dental instrument for the application of liquids, that ensures a more efficient application and leaves less excess material. This object is attained by an instrument wherein the treating portion comprises a sponge.

A safe treatment of locations that are difficult to reach is ensured in a preferred embodiment of the invention wherein the sponge is attached to one end of a holder of the treating portion while the other end of the holder is connected to the handle portion by means of a ball joint. Further embodiments and advantages are defined in the further dependent claims.

The invention will be explained in more detail hereinafter with reference to drawings of embodiments thereof.
- FIG. 1: shows a side view of an instrument of the invention;
- FIG. 2: shows the treating portion of the instrument of FIG. 1 in a side view;
- FIG. 3: shows the treating portion of FIG. 2 in a bottom view; and
- FIG. 4: shows an alternative embodiment of the treating portion in a side view.

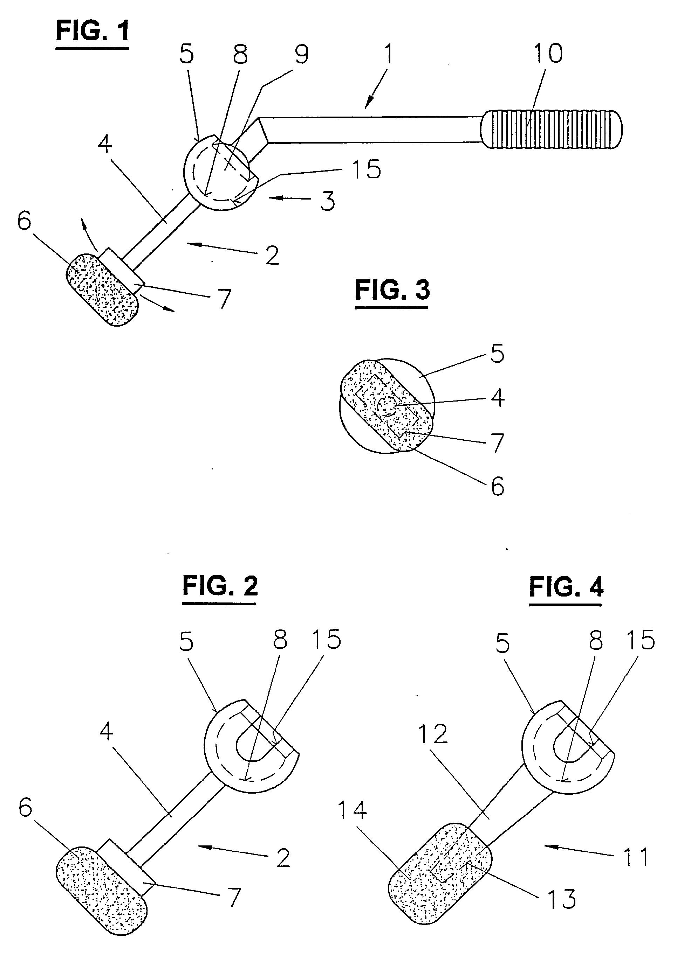

A first exemplifying embodiment of the instrument of the invention is illustrated in FIGs. 1 to 3. The instrument comprises a handle portion 1 and a treating portion 2, these two portions being connected to each other by a ball joint 3. Treating portion 2 consists of a holder 4, e.g. of plastics material, one end of which is provided with a ball socket 5 and the other end with a sponge 6, the latter being cemented, according to the present example, to a supporting disk 7. As known per se in the field of tool manufacture, ball socket 5 is hollow and comprises an opening 8 for the insertion of ball 9 of the handle portion. Furthermore, the rim of the ball socket is provided with a slot 15 allowing to turn the treating portion in the opposite direction of the holder as well.

The handle portion is generally made of metal and capable of being sterilized, and it comprises a handle 10 of plastics material for an easy manipulation of the instrument. The treating portion is designed as a disposable part that is removed from the handle portion and discarded after the treatment.

FIG. 4 shows an alternative embodiment of the treating portion that may also be manufactured from plastics material, one end of holder 12 being provided with the same ball socket 5 as in the preceding embodiment while the other end 13 is tapered in order to carry a sponge 14. Alternatively, it is also possible to use a cylindrical pin.

For the sponge, a highly absorbent material is used whose shape provides a good adaptation to the existing structures. Also, a sponge is capable of absorbing a relatively large amount of liquid without losing it on the way to the location of the application, i.e. without dripping. At the location of the application, the sponge is compressed by applying a pressure, thereby releasing the liquid as desired. In particular, the use of a sponge provides a good access to locations that are difficult to access otherwise and an optimum wetting in these locations, thereby offering an increased safety.

As the sponge is removed from the location of the application, excess material applied will be absorbed due to its expansion, thereby avoiding the formation of unnecessary residual quantities.

The use of a ball joint allows applications in inaccessible locations such as e.g. in a distal box or on a shoulder that would only be reliably accessible by a counter-angularly arranged instrument otherwise. For mesial areas, as well as in the area of the front teeth, a straight positioning may be helpful, i.e. a position where the holder is in line with the handle portion. In undercut locations such as excavations, the sponge ensures an improved application due to its expansion in the cavity.

Preferably, the surface of the sponge should be smooth and free of incisions or edges, and it should be highly absorbent independently of the viscosity of the liquid, as well as highly elastic in order to require only small forces.

The possible applications of such an instrument are not limited to the field of tooth fillings. Thus, an instrument of this kind may also be used in the medical field, e.g. for applications in microsurgery for bleeding bone or tissue portions.

The sponge applicator of the invention may also be used for the application of other liquids or gels of all kinds, e.g. for the local application of fluorides or bleaching gels.

Furthermore, the possible embodiments are not limited to the illustrated and described ones. Thus, it is possible to exchange the functions of the ball and the socket, i.e. to provide the ball at the end of the holder and the socket at the end of the handle portion. Also, sponges of various other shapes may be attached to the holder, and the holder itself may have other dimensions and shapes than the conical, the cylindrical, or the illustrated disk shape.

## Claims

1. A medical instrument for use with liquids, more particularly for the application of liquids onto teeth and removing excess liquids, comprising a handle portion and a treating portion, wherein said handle portion (2, 11) comprises a highly elastic sponge (6, 14).

2. The instrument of claim 1, wherein said sponge (6, 14) is attached to one end of a holder (4, 12) of the treating portion (2, 11) while the other end of the holder is connected to the handle portion (1) by means of a ball joint (3).

3. The instrument of claim 2, wherein said holder is removably connected to said handle portion.

4. The instrument of any one of claims 1 to 3, wherein one end of said handle portion (1) is provided with a ball (9) and the other end of said holder (4, 12) is provided with a ball socket (5) for receiving said ball.

5. The instrument of claim 4, wherein said ball socket (5) comprises a slot (15).

6. The instrument of any one of claims 1 to 5, wherein said holder (4, 12) is made of plastics material.

7. The instrument of any one of claims 1 to 6, wherein the end (13) of said holder (12) carrying said sponge (14) is tapered.
